# EUROPÄISCHE PATENTANMELDUNG

(11) **EP 2 743 299 A1**
(43) Veröffentlichungstag der Anmeldung: **18.06.2014**
(21) Anmeldenummer: 12196819.2
(22) Anmeldetag: 12.12.2012
(51) Int. Cl.: C08K 5/00, C09K 21/12, C08K 5/5399

(54) **Synergistische Zusammensetzung und deren Verwendung als Flammschutzmittel**

(71) Anmelder: Zylum Beteiligungsgesellschaft mbH & Co. Patente II KG, 12529 Schönefeld / Waltersdorf (DE)
(72) Erfinder: Siebertz, Kirsten, Dr., 61130 Nidderau (DE); Pfaendner, Rudolf, Dr., 64668 Rimbach (DE); Metzsch-Zillingen, Elke, Dr., 54584 Feusdorf (DE); Leistner, Marcus, 64846 Groß-Zimmern (DE); Veeck, Walter-Georg, Dr.rer.nat., 55743 Idar-Oberstein (DE); Zerfaß, Torsten, Dr.rer.nat., 55743 Idar-Oberstein (DE)
(74) Vertreter: Zech, Stefan Markus

(57) **Zusammenfassung**

Beschrieben wird eine Zusammensetzung, die verbesserte Eigenschaften insbesondere als Flammschutzmittel aufweist, sowie deren Verwendung als Flammschutzmittel insbesondere für Kunststoffe, beispielsweise in Form von Spritzgussteilen, Folien, Beschichtungen, Schäumen, Fasern, Kabeln und Rohren.

## Beschreibung

Die vorliegende Erfindung betrifft eine Zusammensetzung, die sich insbesondere als Flammschutzmittel eignet.

Die meisten Kunststoffe sind brennbar und vergleichsweise leicht entflammbar. Um das Brandrisiko von Kunststoffen in bestimmten Anwendungen zu vermindern oder auszuschließen, ist es deshalb zwingend erforderlich, die Entflammbarkeit zu verringern und flammfeste Kunststoffzusammensetzungen einzusetzen. Dazu werden in der Regel Flammschutzmittel dem Kunststoff beigegeben mit dem Ziel, das Entzünden für eine bestimmte Zeit zu verhindern oder die Brandausbreitung signifikant zu verzögern. Traditionelle Flammschutzmittel basieren auf chlor- und bromhaltigen Verbindungen (in Verbindung mit Antimontrioxid), von phosphorhaltigen und stickstoffhaltigen Verbindungen und von anorganischen Hydroxiden. In neuerer Zeit werden aus Umweltgründen halogenfreie Flammschutzlösungen bevorzugt. Zur Herstellung von flammgeschützten Kunststoffen gibt es eine Vielzahl von Flammschutzmitteln, die in der Regel substratspezifisch für ein bestimmtes Polymer und einen bestimmten Einsatzbereich entsprechend den dafür zu Grunde liegenden Normen eingesetzt werden.

Besonders ausgeprägt ist das Problem der Entflammbarkeit bei Kunststoffen z.B. aus der Gruppe der Polyolefine, der Polystyrole und der Polyurethane. Diese haben sich als besonders empfindlich gegenüber einer Entflammung erwiesen. Insbesondere für Anwendungen im Bereich der Haushaltselektronik, oder für Baumaterialien und Möbel besteht also ein starker Bedarf an Flammschutzmitteln, die die hohe Entflammbarkeit dieser Kunststoffe hemmen können. Beispielsweise wurden zur wirksamen Flammhemmung von polyolefinischen Kunststoffen und von Polyurethanen insbesondere anorganische Flammschutzmittel vorgeschlagen worden, wie Magnesiumhydroxid oder Aluminiumhydroxid. Ein großer Nachteil dieser anorganischen Additive besteht jedoch darin, dass sie in sehr hohen Mengen, oft über 60 Gew.-%, zugesetzt werden müssen, um die notwendige flammhemmende Wirkung zu erzielen.

Aus der DE 10 2004 047 257 ist eine Verbindungsklasse von Flammschutzmitteln bekannt, die unsymmetrische und symmetrische phosphorhaltige Heptazinderivate und davon abgeleitete Oligomere und Polymere betrifft. Die in der DE 10 2004 047 257 beschriebenen phosphorhaltigen Heptazinderivate eignen sich als Flammschutzmittel für Kunststoff, Textilien, Holzprodukte, Papier, Kartonagen, Verputze, Dämmstoffe, Baustoffverbünde und polymere Schäume.

Trotz der guten Ergebnisse, die mit den Flammschutzmitteln gemäß DE 10 2004 047 257 erzielt werden, hat es sich gezeigt, dass eine weitere Steigerung der Flammschutzwirkung wünschenswert wäre. Dies gilt insbesondere bei Verwendung der Flammschutzmittel gemäß DE 10 2004 047 257 in bestimmten Kunststoffen, wie z.B. Polyolefinen, bei denen eine weitere Steigerung der Flammschutzwirkung aus technischen und wirtschaftlichen Gründen wünschenswert erscheint.

Der vorliegenden Erfindung lag somit die Aufgabe zu Grunde, weiter verbesserte Flammschutzmittel bereitzustellen.

Die genannte Aufgabe wird gelöst durch eine Zusammensetzung, umfassend
(a) unsymmetrische und symmetrische phosphorhaltige Heptazinderivate, dargestellt durch die Formel (1), unsymmetrische und symmetrische phosphorhaltige Melamin-Derivate, dargestellt durch die Formel (1a)), unsymmetrische und symmetrische phosphorhaltige Melam-Derivate (1,3,5- triazine-2,4,6-triamine-n - (4,6-diamino-1,3,5- triazine-2-yl) dargestellt durch die Formel (1b)), und/oder unsymmetrische und symmetrische phosphorhaltige Melon-Derivate (poly [8-amino- 1,3,4,6,7,9,9b- Heptaazaphenalene-2,5-diyl)imino] dargestellt durch die Formel (1c)) 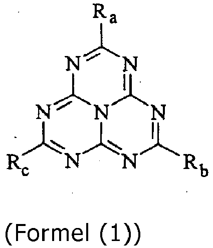 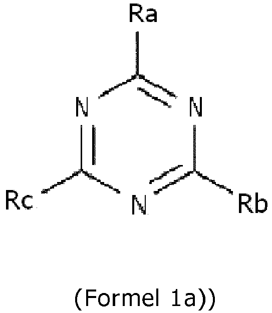 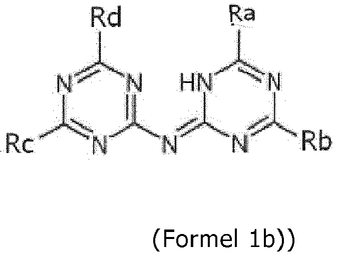 und/oder 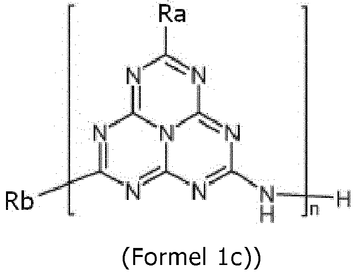 wobei in der Formel (1c) n = 2 bis 100 ist (oder ≥ 2),
   wobei Rₐ, R_{b}, R_{c} und R_{d} unabhängig voneinander eine Azidgruppe - N₃ oder eine -N=PR₁R₂R₃ Gruppe bedeuten, mit der Maßgabe dass, mindestens ein Rest von Rₐ, R_{b} und R_{c} eine -N=PR₁R₂R₃ Gruppe ist, wobei R₁, R₂, und R₃ unabhängig voneinander einen Rest darstellen, ausgewählt aus der Gruppe α, bestehend aus einem geradkettigen oder verzweigtkettigen (C₁-C₁₂)-Alkylrest, einem (C₃-C₇)-Cycloalkylrest, einem geradekettigen oder verzweigtkettigen (C₁-C₁₂)-Alkenylrest, einem geradkettigen oder verzweigtkettigen (C₁-C₁₂)-Alkoxyrest, Furyl, Furanyl, Benzofuranyl, Thienyl, Thiazolyl, Benzothiazolyl, Thiadiazolyl, Imidazolyl, Pyrazolyl, Triazolyl, Tetrazolyl, Pyrazinyl, Benzothienyl, Morpholinyl, Thiomorpholinyl, Piperidinyl, Piperazinyl, Pyrrolidinyl, Pyrimidinyl, Imidazolinyl, Pyrazolidinyl, Phenyl, Phenoxy, Benzyl, Benzyloxy, Naphthyl, Naphthoxy, Di(C₁-C₆)alkyl-amino, Tri(C₁-C₆)alkylsilyl oder Pyridyl, die jeweils mit ein bis fünf Substituenten, unabhängig voneinander ausgewählt aus der Gruppe β, bestehend aus einem geradkettigen oder verzweigtkettigen (C₁-C₆)-Alkylrest, einem (C₃-C₇)-Cycloalkylrest, einem geradkettigen oder verzweigtkettigen (C₁-C₆)-Alkenylrest, einem geradkettigen oder verzweigtkettigen (C₁-C₆)-Alkoxyrest, Halogen, Hydroxy, Amino, Di(C₁-C₆)alkylamino, Nitro, Cyan, Benzyl, 4-Methoxybenzyl, 4-Nitrobenzyl, Phenyl, und 4-Methoxyphenyl, substituiert sein können, und davon abgeleitete Oligomere und Polymere;
(b1) Verbindungen mit NOR-Gruppe und/oder
(b2) Verbindungen auf der Basis von Phosphorsäure, Phosphinaten, Phosphonaten und/oder Oxaphosphorinoxiden.

Es hat sich überraschenderweise gezeigt, dass die Kombination eines phosphorhaltigen Heptazinderivats (a) mit einer Verbindung mit NOR-Gruppe (b) und/oder einer Verbindung auf Basis von Phosphorsäure, Phosphinaten, Phosphonaten und/oder Oxaphosphorinoxiden zu einer synergistischen Wirkung der Flammschutzwirkung führt. Somit können die erfindungsgemäßen Zusammensetzungen bereits in geringeren Mengen eine höhere Flammschutzwirkung erzielen als die Einzelkomponenten. Dies gilt insbesondere bei Verwendung der erfindungsgemäßen Zusammensetzung als Flammschutzmittel für Kunststoffe aus der Gruppe der Polyolefine. Es hat sich weiterhin gezeigt, dass die erfindungsgemäßen Flammschutzmittel zu deutlich kürzeren Brennzeiten eines Prüfkörpers führen im Vergleich zu den Brennzeiten, die durch gleiche Mengen der Einzelkomponenten erzielt werden können. Es liegt somit eine synergistische Wirkung der Einzelkomponenten der erfindungsgemäßen Zusammensetzungen vor, da ohne Erhöhung der Gesamtmenge des eingesetzten Additives eine sehr starke Reduktion der Brandzeit bei normgerechten Prüfungen erzielt werden kann.

In einer bevorzugten Ausführungsform der vorliegenden Erfindung werden als Verbindungen (a) symmetrische phosphorhaltige Heptazinderivate, dargestellt durch die Formel (2) eingesetzt, 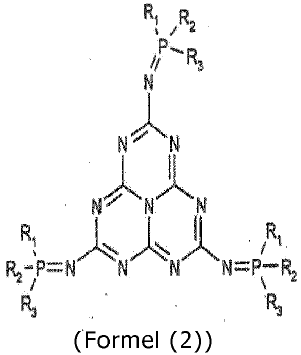 worin R₁, R₂, und R₃ unabhängig voneinander einen Rest darstellen, ausgewählt aus der Gruppe α, bestehend aus einem geradkettigen oder verzweigtkettigen (C₁-C₁₂)-Alkylrest, einem (C₃-C₇)-Cycloalkylrest, einem geradkettigen oder verzweigtkettigen (C₁-C₁₂)-Alkenylrest, einem geradkettigen oder verzweigtkettigen (C₁-C₁₂)-Alkoxyrest, Furyl, Furanyl, Benzofuranyl, Thienyl, Thiazolyl, Benzothiazolyl, Thiadiazolyl, Imidazolyl, Pyrazolyl, Triazolyl, Tetrazolyl, Pyrazinyl, Benzothienyl, Morpholinyl, Thiomorpholinyl, Piperidinyl, Piperazinyl, Pyrrolidinyl, Pyrimidinyl, Imidazolinyl, Pyrazolidinyl, Phenyl, Phenoxy, Benzyl, Benzyloxy, Naphthyl, Naphthoxy, Di(C₁-C₆)alkylamino, Tri(C₁-C₆)alkylsilyl oder Pyridyl, die jeweils mit ein bis fünf Substituenten, unabhängig voneinander ausgewählt aus der Gruppe β, bestehend aus einem geradkettigen oder verzweigtkettigen (C₁-C₆)-Alkylrest, einem (C₃-C₇)-Cycloalkylrest, einem geradkettigen oder verzweigtkettigen (C₁-C₆)-Alkenylrest, einem geradkettigen oder verzweigtkettigen (C₁-C₆)-Alkoxyrest, Halogen, Hydroxy, Amino, Di(C₁-C₆)alkylamino, Nitro, Cyan, Benzyl, 4-Methoxybenzyl, 4-Nitrobenzyl, Phenyl, und 4-Methoxyphenyl, substituiert sein können und davon abgeleitete Oligomere und Polymere.

Vorzugsweise umfasst die Gruppe β die vorstehenden Substituenten in einer Form, die keine halogenhaltigen Gruppen aufweisen. Die Gruppe β liegt somit vorzugsweise in nichthalogenierter Form vor.

Die erfindungsgemäß eingesetzten phosphorhaltigen Heptazinderivate (a) sind üblicherweise luftstabil und farblos/weiß.

In einer besonders bevorzugten Ausführungsform der vorliegenden Erfindung stellen R₁, R₂, und R₃ des phosphorhaltigen Heptazinderivats (a) gemäß der vorstehenden Formel (2) jeweils einen aromatischen Rest dar, der über Sauerstoff gebunden ist, insbes. -O-Phenyl (Phenoxy) oder jeweils m-Kresyloxy-, -1-naphthyloxy oder 2-naphthyloxy oder 2-biphenyloxy oder 4-biphenyloxy dar.

Im Vergleich zu den herkömmlichen Flammschutzmitteln des Standes der Technik können die erfindungsgemäß eingesetzten phosphorhaltigen Heptazinderivate (a), die auch als Melemphosphoranylide bezeichnet werden können, die Melamin-, Melam-, Melonderivate, durch entsprechende Auswahl der Reste hinsichtlich der physikalischen und chemischen Eigenschaften der resultierenden Verbindungen dieser Stoffklasse vorteilhaft variiert werden und so in einfacher Art und Weise gezielt für eine bestimmte Anwendung "maßgeschneidert" werden.

Im Hinblick auf eine Verwendung der erfindungsgemäß eingesetzten phosphorhaltigen Heptazinderivate (a), die phosphorhaltigen Melamin-, Melam- und Melonderivate als Bestandteil einer Flammschutzmittel-Zusammensetzung können so beispielsweise vorteilhaft eine erhöhte Löslichkeit des Derivats in einem zu schützenden Kunststoff sowie eine bessere Anpassung an die Anwendungserfordernisse erzielt werden. Die Stoffklasse der erfindungsgemäß eingesetzten phosphorhaltigen Heptazin-, Melamin-, Melam- und Melonderivate bietet schon allein aufgrund ihrer chemischen Struktur eine bessere Verträglichkeit und Einarbeitbarkeit durch z.B. Schmelzbarkeit oder Löslichkeit in Kunststoffen als Melon und Melem, die als Feststoffe eingesetzt werden.

Des Weiteren bieten die erfindungsgemäß eingesetzten phosphorhaltigen Heptazin-, Melamin-, Melam- und Melonderivate den Vorteil, dass sie im Hinblick auf eine Flammschutzverwendung hinsichtlich der Reste R₁, R₂ und R₃ halogenfrei gestaltet werden können und somit im Vergleich zu den halogenhaltigen Flammschutzmitteln des Standes der Technik umweltfreundlich sind.

Gemäß einer weiteren Ausführungsform der vorliegenden Erfindung können die phosphorhaltigen Heptazin-, Melamin-, Melam- und Melonderivate auch als Oligomer oder Polymer vorliegen, wobei bei letzteren beispielsweise Baueinheiten vorliegen, die zwei oder mehr verbrückende Phosphingruppen bzw. Phosphazenverbrückungen tragen wie in nachfolgender Formel (2b) für HeptazinDerivate beispielhaft gezeigt:

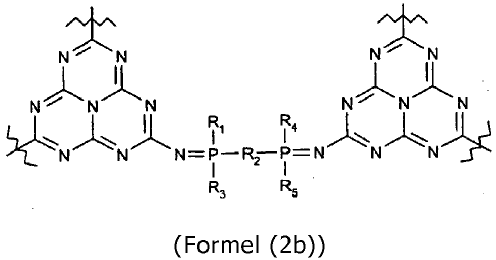

Bevorzugt für R2 sind als Brücken -O-phenyl-1,3-O-, -O-phenyl-1,4-O- und -O-naphthyl-O-. Dabei ist es möglich, dass die Polymere auch in vernetzer Form vorliegen.

In einer besonders bevorzugten Ausführungsform ist die die erfindungsgemäße Zusammensetzung so ausgestaltet, dass die Verbindung mit NOR-Gruppe (b1) ein N-Alkoxyamin ist, insbesondere ein N-Alkoxyamin gemäß Formel (3), 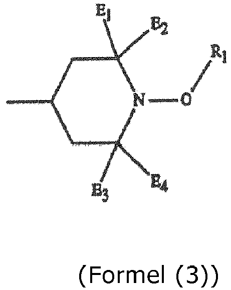 wobei E1-E4 Methyl, und R₁=Alkyl,Cycloalkyl oder Acyl ist.

Die gehinderten N-Alkoxyamin-Verbindungen sind im Stand der Technik gut bekannt. Diese werden im Fachgebiet auch als N-Alkoxy-gehinderte Amine und NOR-gehinderte Amine oder NOR-gehinderte Amin-Licht-Stabilisatoren oder NORol HALS bezeichnet.

Solche gehinderte N-Alkoxyamine werden z.B. in den US-Patentanmeldungen 5 004 770, 5 204 473, 5 096 950, 5 300 544, 5 112 890, 5 124 378, 5 145 893, 5 216 156, 5 844 026, 6 117 995, 6 271 377, 09/505 529, 09/794 710, 09/714 717, 09/502 239 und 60/312 517 beschrieben. Die diesbezügliche Offenbarung dieser Patentanmeldungen und Patente wird hiermit als Referenz mit einbezogen.

Geeignete N-Alkoxyamine sind insbesondere:
1-Cyclohexyloxy-2,2,6,6-Tetramethyl-4-Octadecylaminopiperidin;
Bis(1-Octyloxy-2,2,6,6-Tetramethylpiperidin-4-yl) Sebacat;
2,4-Bis[(1-Cyclohexyloxy-2,2,6,6-Tetramethylpiperidin-4-yl)Butylamino]-6-(2-Hydroxyethylamino-S-Triazin;
Bis(1-Cyclohexyloxy-2,2,6,6-Tetramethylpiperidin-4-yl) Adipat;
2,4-Bis[(1-Cyclohexyloxy-2,2,6,6-Tetramethylpiperidin-4-yl)Butylamino]-6-Chloro-S-Triazin;
1-((2-Hydroxy-2-Methylpropoxy)-4-Hydroxy-2,2,6,6-Tetramethylpiperidin;
1-((2-Hydroxy-2-Methylpropoxy)-4-Oxo-2,2,6,6-Tetramethylpiperidin;
1-((2-Hydroxy-2-Methylpropoxy)-4-Octadecanoyloxy-2,2,6,6-Tetramethylpiperidin;
Bis(1-(2-Hydroxy-2-Methylpropoxy)-2,2,6,6-Tetramethylpiperidin-4-yl) Sebacat;
Bis(1-(2-Hydroxy-2-Methylpropoxy)-2,2,6,6-Tetramethylpiperidin-4-yl) Adipat;
2,4-Bis{N-[1-(2-Hydroxy-2-Methylpropoxy)-2,2,6,6-Tetramethylpiperidin-4-yl]-N-Butylamino}-6-(2-Hydroxyethylamino)-S-Triazin);
das Reaktionsprodukt von 2,4-Bis[(1-Cyclohexyloxy-2,2,6,6-Tetramethylpiperidin-4-yl)Butylamino]-6-Chloro-S-Triazin mit N,N'-Bis(3-Aminopropylethylendiamin);
die Oligomer-Verbindung, welche das Kondensationsprodukt ist von 4,4'-Hexamethylen-Bis(Amino-2,2,6,6-Tetramethylpiperidin) und 2,4-Dichloro-6-[(1-Cyclohexyloxy-2,2,6,6-Tetramethyl-4-yl)Butylamino]-S-Triazin, an den Enden verschlossen mit 2-Chloro-4,6-Bis(Dibutylamino)-S-Triazin; und
Verbindungen der Formeln: 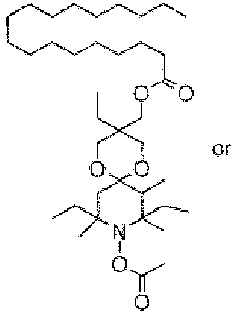 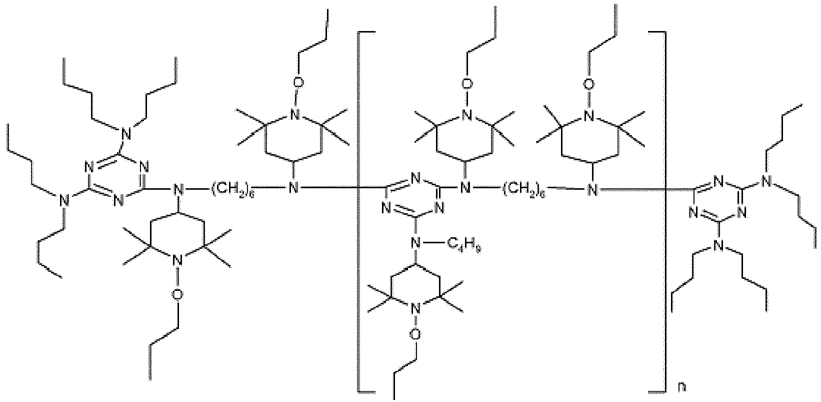
, in denen n 1-15 ist. Diese Verbindungen werden auch in Beispiel 2 der US-Patentanmeldung Nr. 6 117 995 offenbart.

Die oben genannten Verbindungen sind teilweise kommerzielle Produkte und werden unter den folgenden Handelsnamen gehandelt: FLAMESTAB NOR 116 (RTM), TINUVIN NOR 371 (RTM) und IRGATEC CR 76 (RTM) von BASF SE.

Während die flammhemmende Wirkung von N-Alkoxyaminen im Stand der Technik bereits bekannt war, hat sich nun überraschend gezeigt, dass eine synergistische Zusammenwirkung in Bezug auf die flammschutzhemmende Wirkung bei Kombination von -N-Alkoxyaminen gemäß der Formel (3) mit phosphorhaltigen Heptazin-, Melamin-, Melam- und Melonderivaten (a) ergibt.

Darüber hinaus hat sich gezeigt, dass besonders gute Ergebnisse erzielt werden, wenn die erfindungsgemäße Zusammensetzung so ausgestaltet ist, dass die Verbindung (b2) eine Verbindung auf Basis von Phosphorsäure ist, insbesondere in Form von Ammoniumpolyphosphat und/oder Melaminpolyphosphat.

Ein besonders bevorzugtes Beispiel für Ammoniumpolyphosphate sind die unter dem Handelsnamen kommerziell erhältlichen Exolit AP von Clariant. Ein besonders bevorzugtes Beispiel für ein Melaminpolyphosphat ist das Melapur 200 von BASF SE.

Soweit es sich bei der Verbindung (b2) um eine Verbindung auf Basis von Phosphinaten handelt, werden besonders gute Ergebnisse erzielt, wenn die erfindungsgemäße Zusammensetzung so ausgestaltet ist, dass die Verbindung (b2) in Form einer Verbindung gemäß der Formel (4a) und/oder (4a1) vorliegt, 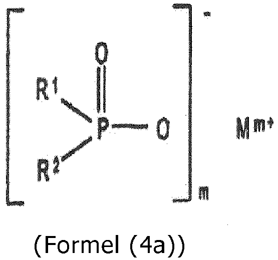 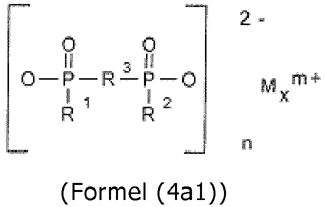 , wobei bevorzugt R1 und R2 identisch oder verschieden sind und aus einem linearen oder verzweigten C1-C6-Alkyl und/oder Aryl bestehen;
M aus Mg, Ca, Al, Sb, Sn, Ge, Ti, Fe, Zr, Ce, Bi, Sr, Mn, Li, Na, K, und/oder eine protonierte Stickstoff-Bas, vorzugsweise Kalzium-Ionen, Magnesium-Ionen, Aluminium-Ionen, und/oder Zink-Ionen; und
m von 1 bis 4 ist, n von 1 bis 4 ist, x von 1 bis 4 ist; m vorzugsweise 2 oder 3, n vorzugsweise 1 oder 3 und x vorzugsweise 1 oder 2 ist.

In einer besonders bevorzugten Ausführungsform sind in Formel (4a) und (4a1) R₁, R₂=Alkyl und M=Al, Zn.

Ein besonders bevorzugtes Beispiel für ein erfindungsgemäßes Phosphinat sind die kommerziell erhältlichen Produkte Exolit OP von Clariant.

Beispiele der phosphorhaltigen Säuren, die Bestandteile der Phosphinate sind, sind:
Dimethylphosphonige Säure, Ethylmethylphosphonige Säure, Diethylphosphonige Säure, Methyl-n-Propylphosphonige Säure.
Vorzugsweise weist das Metallsalz der hypophosphorigen Säure der Formel 4b die Struktur 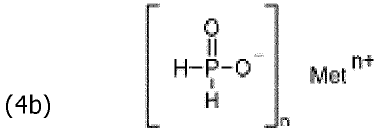
auf, wobei Met ein Metall ist, ausgewählt aus den Gruppen I, II, III und IV des periodischen Systems der Elemente; und n eine Zahl von 1 bis 4 ist, die der Ladung des Metall-Ions entspricht.

Metⁿ⁺ ist beispielsweise Na⁺, Ca²⁺, Mg²⁺, Zn²⁺, Ti⁴⁺ oder Al³⁺, wobei Ca, Zn, Al besonders bevorzugt sind.

Die oben genannten Salze der hypophosphorigen Säure sind teilweise kommerziell erhältlich. Ein besonders bevorzugtes Beispiel für ein Salz der hypophosphorigen Säure im Sinne der vorliegenden Erfindung ist das kommerziell erhältliche Phoslite von Italmatch.

In einer alternativen Ausführungsform handelt es sich bei der Verbindung (b2) um eine Verbindung auf Basis von Phosphonaten. Hier hat sich gezeigt, dass in einer besonders bevorzugten Ausführungsform die erfindungsgemäße Zusammensetzung so ausgestaltet ist, dass die Verbindung (b2) eine Verbindung auf Basis von Phosphonaten in Form der Formel (5) ist, 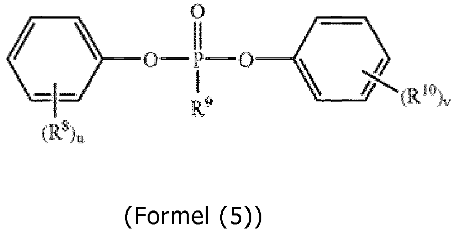 wobei R₈, R₉ und R₁₀=Alkyl sind.

Die Erfindung umfasst darüber hinaus Zusammensetzungen, die als Komponente (b2) Phosphonat-Oligomere, Polymere und Co-Polymere umfasst. Linear oder verzweigte Phosphonat-Oligomere und Polymere sind aus dem Stand der Technik bekannt. Für verzweigte Phosphonat-Oligomere und Polymere wird auf die US-Patente 2 716 101, 3 326 852, 4 328 174, 4 331 614, 4 374 971, 4 415 719, 5 216 113, 5 334 692, 3 442 854, 6 291 630 B1 und 6 861 499 B1 verwiesen. Für Phosphonat-Oligomere wird auf die US-Patentanmeldungen 2005/0020800 A1, 2007/0219295 A1 und 2008/0045673 A1 verwiesen. In Bezug auf lineare Phosphonat-Oligomere und Polymere wird auf die US-Patent-Dokumente 2 534 252, 3 946 093, 3 919 363, 6 288 210 B1, 2 682 522, 2 891 915 verwiesen.

In einer weiteren alternativen bevorzugten Ausführungsform handelt es sich bei der Verbindung (b2) um eine Verbindung auf Basis von Oxaphosphorinoxid. In Bezug auf diese alternative Ausführungsform hat sich gezeigt, dass besonders gute Ergebnisse erzielt werden, wenn die erfindungsgemäße Zusammensetzung so ausgestaltet ist, dass die Verbindung (b2) eine Verbindung gemäß Formel (6) ist, 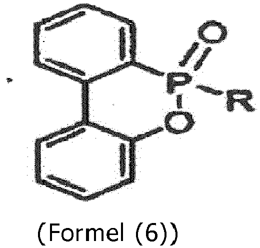 wobei R=H oder Alkyl ist.

In einer besonders bevorzugten Ausführungsform handelt es sich bei der Verbindung (b2) um DOPO-Derivate (9,10-Dihydro-9-oxa-10-Phosphaphenanthren-10-oxid)-Derivate oder 6H-Dibenzo(c,e) (1,2)-oxaphosphorin-6-oxid)-Derivate (wobei PH-funktionalisierte Derivate bevorzugte sind). Besonders bevorzugte Verbindungen sind im Folgenden dargestellt: 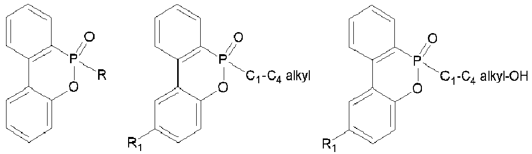 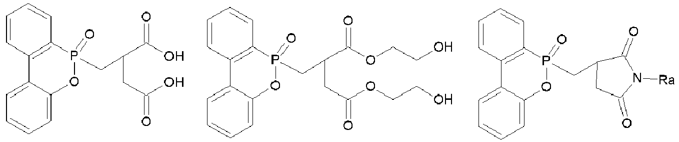 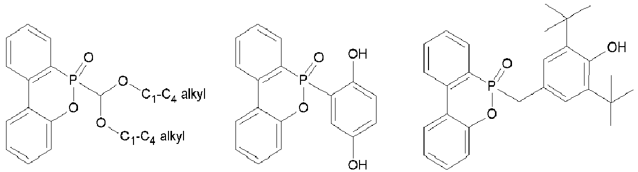 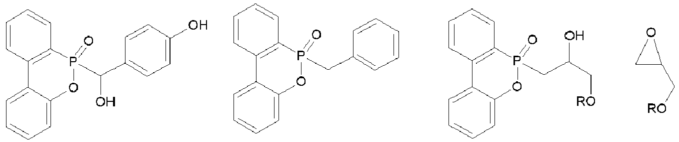 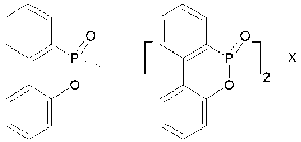 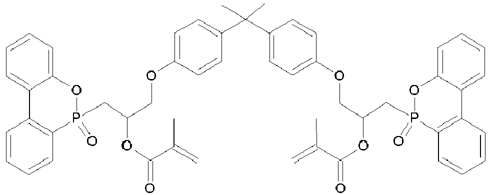 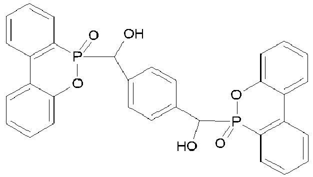 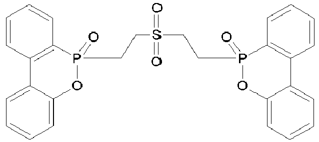 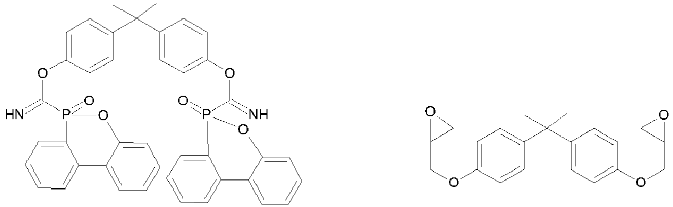 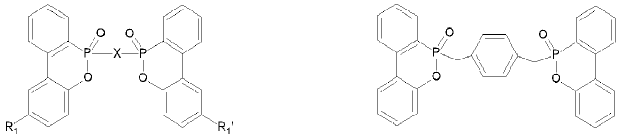 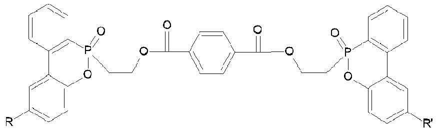 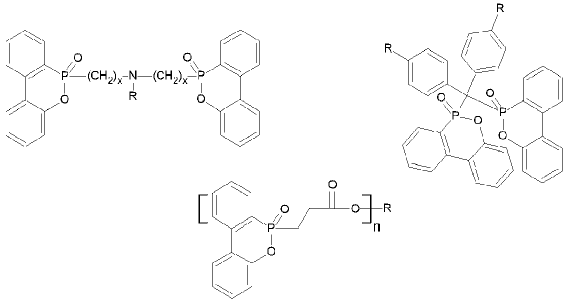 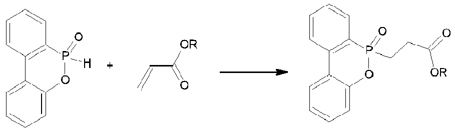 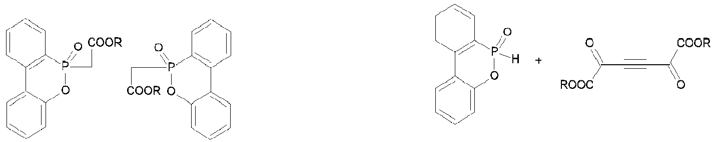 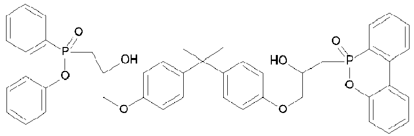 , wobei R=H oder Akyl sind.

In einer besonders bevorzugten Ausführungsform weist die Verbindung (b2) eine der folgenden Formeln auf:

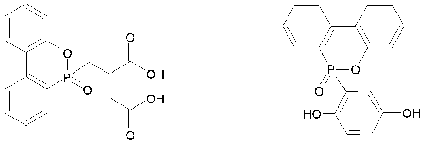

In einer noch stärker bevorzugten Ausführungsform handelt es sich bei der Verbindung (b2) um die Verbindung gemäß Formel (6) mit R = H, also um 9,10-Dihydro-9-oxa-10-Phosphaphenanthren-10-oxid (DOPO).

Die vorliegende Erfindung betrifft auch die Verwendung einer Zusammensetzung wie oben beschrieben als Flammschutzmittel, insbesondere für Kunststoffe und Beschichtungen.

Geeignete Kunststoffe sind:
a) Polymere aus Olefinen oder Diolefinen wie z.B. Polyethylen (LDPE, LLDPE, VLDPE, MDPE, HDPE), Polypropylen, Polyisobutylen, Poly-4-methyl-penten-1, Polybutadien, Polyisopren, Polycycloocten, sowie Copolymere in Form von statistischen oder Blockstrukturen wie z.B. Polypropylen-Polyethylen (EP), EPM oder EPDM, Etthylen-Vinylacetat (EVA), Ethylen-Acrylester.
b) Polystyrol, Polymethylstyrol, Styrol-Butadien, Styrol-Butadien-Styrol (SBS), Styrol-isopren, styrol-butadien-acrylnitril (ABS), styrol-acrylnitril-acrylat (ASA) Styrol-Maleinsäureanhydrid-Polymere einschl. entsprechender Pfropfcopolymere wie z.B. Styrol auf Butadien oder Maleinsäureanhydrid auf SBS.
c) Halogenenthaltende Polymere wie z.B. Polyvinylchlorid und Polyvinylidenchlorid.
d) Polymere von ungesättigten Estern wie z.B. Polyacrylate und Polymethacrylate wie PMMA, Polyacrylnitril.
e) Polymere aus ungesättigten Alkoholen und Derivaten, wie z.B.
   Polyvinylalkohol, Polyvinylacetat, Polyvinylbutyral.
f) Polyacetale, wie z.B. Polyoxymethylen.
g) Polyphenylenoxide und Blends mit Polystyrol.
h) Polyurethane, insbes. lineare Polyurethane.
i) Polyamide wie z.B. Polyamid-6, 6.6., 6.10. 4.6, 6.12, 12.12., Polyamid 11, Polyamid 12 sowie (teil-)aromatische Polyamide wie z.B. Polyphthalamide.
j) Polyimide, Polyamidimide, Polyetherimide, Polyketone, Polysulfone, Polyethersulfone, Polyphenylensulfid.
k) Polyester wie z.B. Polyethylenterephthalat und Polybutylenterephthalat, Polymilchsäure.
l) Polycarbonat.
m) Cellulosederivate wie z.B. Cellulosenitrat, Celluloseacetat, Cellulosepropionat.
n) sowie Mischungen, Kombinationen oder Blends aus zwei oder mehr der zuvor genannten Polymeren.

In einer besonders bevorzugten Ausführungsform werden die erfindungsgemäßen Zusammensetzungen als Flammschutzmittel für Kunststoffe aus der Gruppe der Polyolefine, der Polystyrole und der Polyurethane eingesetzt. Ganz besonders bevorzugt sind Polyolefine wie Polyethylen, Polypropylen oder Dien-Elastomere, Copolymere aus diesen Polymeren und ihre Blends mit anderen Polymeren. Vorzugsweise enthält der Kunststoff 5-30 % der Flammschutzmittelkombination.

Typische Anwendungen der erfindungsgemäß flammgeschützten Kunststoffe sind in der Elektro/Elektronikindustrie, im Transport- und Bauwesen, z.B. in Form von Spritzgussteilen, Folien, Beschichtungen, Schäumen, Fasern, Kabeln und Rohren, die über Extrusion, Spritzguss, Blasformen, Pressverfahren hergestellt werden. Die Einarbeitung der erfindungsgemäßen Flammschutzzusammensetzungen erfolgt vorzugsweise durch Extrusion.

Die vorliegende Erfindung wird durch die nachstehenden, nichtbeschränkenden Beispiele weiter erläutert.

Die Synthese der im folgenden eingesetzten Heptazinderivate erfolgte gemäß DE 102004047257, in analoger Weise können die Melamin, Melam und Melon-Derivate hergestellt werden.

### Beispiele

### Beispiel 1: Synergistische Wirkung der erfindungsgemäßen Zusammensetzungen bei Einsatz als Flammschutzmittel für Polyolefine.

Die Extrusionen der Polypropylen-Proben (DOW C766-03) erfolgen bei einer Temperatur von 190°C und einer Schneckendrehzahl von 150 U/min auf einem DSM Micro 5cc, Doppelschneckenextruder. Die Verweilzeit des Gemisches im Bypass-Betrieb beträgt 60 s. Das gewünschte Gemisch aus Polymer und Additiven wird zunächst in einem Becherglas manuell vermischt und in kleinen Portionen dem Mikroextruder zugeführt. Ist das Volumen des Gerätes mit Schmelze gefüllt, bleibt das Material noch 60 s (Verweilzeit) im Gerät und wird dann abgelassen.

Die erhaltenen Kunststoff-Stränge werden granuliert (Pell-Tec SD 50 pure).

Probekörper für die Brandprüfung werden aus dem Granulat bei einer Temperatur von 220°C und einem Druck von 2 t auf einer hydraulischen 10 t-Presse (Werner & Pfleiderer) hergestellt. Dazu wird es in die Pressform eingefüllt und diese in die bereits vorgeheizte Presse überführt. Bei einem Druck von 0,5 t wird das Granulat zunächst 60 s lang aufgeschmolzen. Nach Ablauf der Schmelzzeit wird der Druck auf 2 t erhöht und für weitere 3 min konstant gehalten. Unter Beibehaltung des Anpressdruckes wird die Form auf 60°C abgekühlt und danach die Probenkörper entnommen. Die Probenkörper haben gemäß Norm die folgenden Dimensionen: 127,5 x 12,5 x 1,5 mm.

Die in der Tabelle 1 enthaltenen erfindungsgemäßen Beispiele und Vergleichsbeispiele wurden nach DIN EN 60695-11-10 geprüft und die Brennzeiten und Klassifizierung gemäß Norm erhalten:

**Tabelle 1: Zusammensetzungen in Polypropylen (Beispiel: 7 HDPE) und Ergebnisse der Brandprüfung**

| Beispiel | Zusammensetzung Flammschutzmittel | Brennzeiten Summe der 5 Prüfkörper bei zwei Beflammungen in Sekunden | Klassifizierung nach DIN EN 60695-11-10 | Anmerkung |
|---|---|---|---|---|
| Vergleichsbeispiel 1 | 25% HZD | 96 | V-2 | |
| Vergleichsbeispiel 2 | 6% Flamestab NOR 116 | * | Nicht klassifiziert | * Probe brennt vollständig bei 2. Beflammung ab |
| Vergleichsbeispiel 3 | 25% Melem | 90,3 | Nicht klassifiziert | |
| Erfindungsgemäßes Beispiel 1 (Phosphinat) | 12,5% HZD + 12,5% Exolit OP 1230 | 37,8 | V-2 | |
| Erfindungsgemäßes Beispiel 2 (Ammoniumpolyphosphat | 12,5% HZD + 12,5% FR CROS 484 | 44,6 | V-2 | |
| Erfindungsgemäßes Beispiel 3 (NOR) | 19% HZD + 6% Flamestab NOR 116 | 14,8 | V-2 | |
| Erfindungsgemäßes Beispiel 4 (NOR) | 8% HZD + 2% Flamestab NOR 116 | 7,5 | V-2 | |
| Erfindungsgemäßes Beispiel 5 (NOR) | 16% HZD-2 + 4% Flamestab NOR 116 | 56 | V-2 | |
| Erfindungsgemäßes Beispiel 6 (NOR) | 5% HZD + 5% DOPO + 5% Flamestab NOR 116 | 13,0 | V-2 | |
| Erfindungsgemäßes Beispiel 7 (NOR) | 20% HZD + 5% Flamestab NOR 116 | 42,4 | V-2 | |

| | | | | |
|---|---|---|---|---|
| *HZD = Phosphorhaltiges Heptazinderivat der Formel 2a, mit R = -O-Phenyl* *HZD-2 = Phosphorhaltiges Heptazinderivat der Formel 2a, mit R = -O-Naphthyl* | | | | |

Die in Tabelle 1 gezeigten Versuchsergebnisse zeigen sehr deutlich, dass die erfindungsgemäßen Zusammensetzungen bei Einsatz als Flammschutzmittel eine synergistische Wirkung der Einzelkomponenten aufweisen. Dies zeigt besonders deutlich eine Gegenüberstellung der Ergebnisse für die Vergleichsbeispiele 1 und 2 auf der einen Seite und die erfindungsgemäßen Beispiele auf der anderen Seite.

Das Vergleichsbeispiel 1 zeigt bei Verwendung von 25 Gew.-% eines phosphorhaltigen Heptazinderivats eine Brennzeit von 96 Sekunden, während das Vergleichsbeispiel 2 bei Verwendung von 6% Flamestab NOR 116 keine hinreichende Flammhemmung zeigt (die Probe brennt vollständig ab).

Das erfindungsgemäße Beispiel 3 hingegen zeigt, dass eine Kombination aus 19% eines phosphorhaltigen Heptazinderivats wie in Vergleichsbeispiel 1 mit 6% Flamestab NOR 116 wie in Vergleichsbeispiel 2 eine gegenüber dem Vergleichsbeispiel 1 deutlich verkürzte Brennzeit von 14,8 Sekunden aufweist.

Daraus kann geschlossen werden, dass das Ersetzen von 6% des phosphorhaltigen Heptazinderivats gemäß Vergleichsbeispiel 1 durch 6% Flamestab NOR 116 gemäß Vergleichsbeispiel 2 zu einer dramatischen Reduktion der Brennzeit gegenüber dem Vergleichsbeispiel 1 führt. Obwohl die Gesamtmenge an Additiv sowohl bei Vergleichsbeispiel 1 als auch bei Beispiel 3 25% beträgt, ergibt sich eine Brennzeit des Prüfkörpers, die gegenüber der Brennzeit aus Vergleichsbeispiel 1 sehr stark verringert ist (14,8 Sekunden gegenüber 96 Sekunden). Es liegt somit eine starke synergistische Wirkung der Bestandteile der erfindungsgemäßen Zusammensetzung vor, mit der eine starke Reduktion der Flammzeit ohne Erhöhung der Gesamtmenge des flammhemmenden Additivs erzielt werden kann.

## Patentansprüche

1. Zusammensetzung, umfassend
(a) unsymmetrische und symmetrische phosphorhaltige Heptazinderivate, dargestellt durch die Formel (1), unsymmetrische und symmetrische phosphorhaltige Melamin-Derivate, dargestellt durch die Formel (1a)), unsymmetrische und symmetrische phosphorhaltige Melam-Derivate (1,3,5- triazine-2,4,6-triamine-n - (4,6-diamino-1,3,5- triazine-2-yl) dargestellt durch die Formel (1b)), und/oder unsymmetrische und symmetrische phosphorhaltige Melon-Derivate (poly [8-amino- 1,3,4,6,7,9,9b- Heptaazaphenalene-2,5-diyl)imino] dargestellt durch die Formel (1c)) 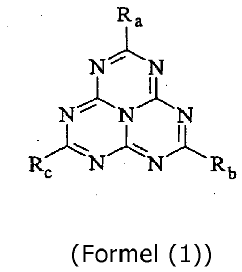 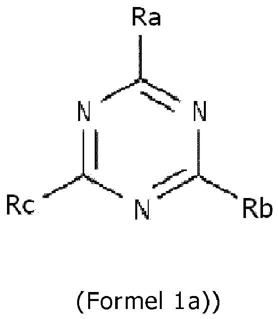 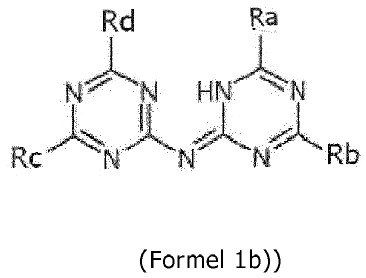 und/oder 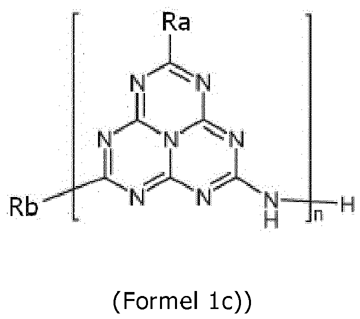 wobei in der Formel (1c) n = 2 bis 100 ist,
wobei Rₐ, R_{b}, R_{c} und R_{d} unabhängig voneinander eine Azidgruppe - N₃ oder eine -N=PR₁R₂R₃ Gruppe bedeuten, mit der Maßgabe dass, mindestens ein Rest von Rₐ, R_{b} und R_{c} eine -N=PR₁R₂R₃ Gruppe ist, wobei R₁, R₂, und R₃ unabhängig voneinander einen Rest darstellen, ausgewählt aus der Gruppe α, bestehend aus einem geradkettigen oder verzweigtkettigen (C₁-C₁₂)-Alkylrest, einem (C₃-C₇)-Cycloalkylrest, einem geradekettigen oder verzweigtkettigen (C₁-C₁₂)-Alkenylrest, einem geradkettigen oder verzweigtkettigen (C₁-C₁₂)-Alkoxyrest, Furyl, Furanyl, Benzofuranyl, Thienyl, Thiazolyl, Benzothiazolyl, Thiadiazolyl, Imidazolyl, Pyrazolyl, Triazolyl, Tetrazolyl, Pyrazinyl, Benzothienyl, Morpholinyl, Thiomorpholinyl, Piperidinyl, Piperazinyl, Pyrrolidinyl, Pyrimidinyl, Imidazolinyl, Pyrazolidinyl, Phenyl, Phenoxy, Benzyl, Benzyloxy, Naphthyl, Naphthoxy, Di(C₁-C₆)alkyl-amino, Tri(C₁-C₆)alkylsilyl oder Pyridyl, die jeweils mit ein bis fünf Substituenten, unabhängig voneinander ausgewählt aus der Gruppe β, bestehend aus einem geradkettigen oder verzweigtkettigen (C₁-C₆)-Alkylrest, einem (C₃-C₇)-Cycloalkylrest, einem geradkettigen oder verzweigtkettigen (C₁-C₆)-Alkenylrest, einem geradkettigen oder verzweigtkettigen (C₁-C₆)-Alkoxyrest, Halogen, Hydroxy, Amino, Di(C₁-C₆)alkylamino, Nitro, Cyan, Benzyl, 4-Methoxybenzyl, 4-Nitrobenzyl, Phenyl, und 4-Methoxyphenyl, substituiert sein können, und davon abgeleitete Oligomere und Polymere;
(b1) Verbindungen mit NOR-Gruppe und/oder
(b2) Verbindungen auf der Basis von Phosphorsäure, Phosphinaten, Phosphonaten und/oder Oxaphosphorinoxiden.

2. Zusammensetzung gemäß Anspruch 1,
**dadurch gekennzeichnet, dass** das phosphorhaltige Heptazinderivat (a) ein phosphorhaltiges Heptazinderivat gemäß Formel (2) ist, 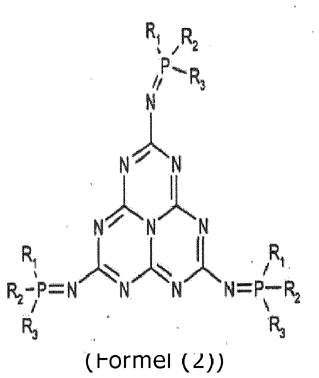 worin R₁, R₂, und R₃ unabhängig voneinander einen Rest darstellen, ausgewählt aus der Gruppe α, bestehend aus einem geradkettigen oder verzweigtkettigen (C₁-C₁₂)-Alkylrest, einem (C₃-C₇)-Cycloalkylrest, einem geradkettigen oder verzweigtkettigen (C₁-C₁₂)-Alkenylrest, einem geradkettigen oder verzweigtkettigen (C₁-C₁₂)-Alkoxyrest, Furyl, Furanyl, Benzofuranyl, Thienyl, Thiazolyl, Benzothiazolyl, Thiadiazolyl, Imidazolyl, Pyrazolyl, Triazolyl, Tetrazolyl, Pyrazinyl, Benzothienyl, Morpholinyl, Thiomorpholinyl, Piperidinyl, Piperazinyl, Pyrrolidinyl, Pyrimidinyl, Imidazolinyl, Pyrazolidinyl, Phenyl, Phenoxy, Benzyl, Benzyloxy, Naphthyl, Naphthoxy, Di(C₁-C₆)alkylamino, Tri(C₁-C₆)alkylsilyl oder Pyridyl, die jeweils mit ein bis fünf Substituenten, unabhängig voneinander ausgewählt aus der Gruppe β, bestehend aus einem geradkettigen oder verzweigtkettigen (C₁-C₆)-Alkylrest, einem (C₃-C₇)-Cycloalkylrest, einem geradkettigen oder verzweigtkettigen (C₁-C₆)-Alkenylrest, einem geradkettigen oder verzweigtkettigen (C₁-C₆)-Alkoxyrest, Halogen, Hydroxy, Amino, Di(C₁-C₆)alkylamino, Nitro, Cyan, Benzyl, 4-Methoxybenzyl, 4-Nitrobenzyl, Phenyl, und 4-Methoxyphenyl, substituiert sein können und davon abgeleitete Oligomere und Polymere.

3. Zusammensetzung gemäß mindestens einem der Ansprüche 1 oder 2,
**dadurch gekennzeichnet, dass**
das phosphorhaltige Heptazinderivat (a) ein phosphorhaltiges Heptazinderivat gemäß Formel (2) ist, wobei R₁, R₂ und R₃ jeweils -O-Phenyl (Phenoxy) oder jeweils m-Kresyloxy-, -1-naphthyloxy oder 2-naphthyloxy oder 2-biphenyloxy oder 4-biphenyloxy darstellen.

4. Zusammensetzung gemäß mindestens einem der Ansprüche 1 bis 3,
**dadurch gekennzeichnet, dass**
die Verbindung mit NOR-Gruppe (b1) ein N-Alkoxyamin ist, insbesondere ein N-Alkoxyamin gemäß Formel (3), 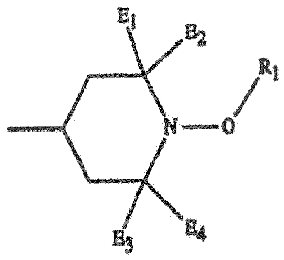 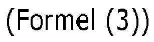 wobei E1-E4 Methyl, und R₁=Alkyl Cycloalkyl oder Acyl ist.

5. Zusammensetzung gemäß mindestens einem der vorhergehenden Ansprüche,
**dadurch gekennzeichnet, dass**
die Verbindung (b2) eine Verbindung auf Basis von Phosphorsäure ist, insbesondere in Form von Ammoniumpolyphosphat und/oder Melaminpolyphosphat.

6. Zusammensetzung gemäß mindestens einem der vorhergehenden Ansprüche,
**dadurch gekennzeichnet, dass** die Verbindung (b2) eine Verbindung auf Basis von Phosphinaten ist, insbesondere in Form einer Verbindung gemäß der Formel (4a), 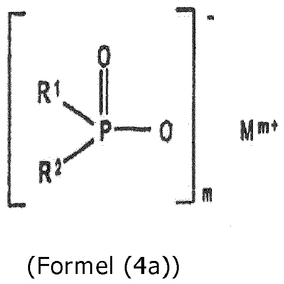 wobei R₁, R₂=Alkyl und M=Al, Zn ist;
oder eine Verbindung gemäß der Formel (4b), 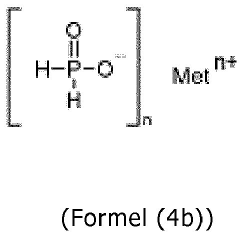 wobei Metⁿ⁺ ein Metall-Ion ist, wobei das Metall ausgewählt ist aus den Gruppen I, II, III und IV des periodischen Systems der Elemente; und n eine Zahl von 1 bis 4 ist, die der Ladung des Metall-Ions entspricht, wobei Metⁿ⁺ insbesondere Na⁺, Ca²⁺, Mg²⁺, Zn²⁺, Ti⁴⁺ oder Al³⁺ ist, insbesondere Ca²⁺, Zn²⁺ oder Al³⁺.

7. Zusammensetzung gemäß mindestens einem der vorhergehenden Ansprüche,
**dadurch gekennzeichnet, dass**
die Verbindung (b2) eine Verbindung auf Basis von Phosphonaten ist, insbesondere in Form der Formel (5), 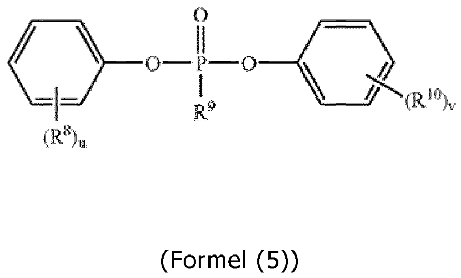 wobei R₈, R₉ und R₁₀=Alkyl sind.

8. Zusammensetzung gemäß mindestens einem der vorhergehenden Ansprüche,
**dadurch gekennzeichnet, dass** die Verbindung (b2) eine Verbindung auf Basis von Oxaphosphorinoxid ist, insbesondere eine Verbindung gemäß Formel (6), 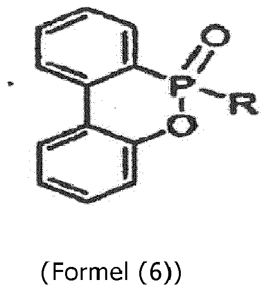 wobei R=H, Alkyl, ... ist.

9. Materialzusammensetzung, umfassend 99 bis 50, insbesondere 95 bis 70, Gew.% eines Polymers und 1 bis 50, insbesondere 5 bis 30, Gew.% einer Zusammensetzung gemäß mindestens einem der Ansprüche 1 bis 8.

10. Materialzusammensetzung gemäß Anspruch 9,
**dadurch gekennzeichnet, dass**
das Polymer ausgewählt ist aus der Gruppe bestehend aus:
a) Polymere aus Olefinen oder Diolefinen wie z.B. Polyethylen (LDPE, LLDPE, VLDPE, MDPE, HDPE), Polypropylen, Polyisobutylen, Poly-4-methyl-penten-1, Polybutadien, Polyisopren, Polycycloocten, sowie Copolymere in Form von statistischen oder Blockstrukturen wie z.B. Polypropylen-Polyethylen (EP), EPM oder EPDM, Etthylen-Vinylacetat (EVA), Ethylen-Acrylester.
b) Polystyrol, Polymethylstyrol, Styrol-Butadien, Styrol-Butadien-Styrol (SBS), Styrol-isopren, styrol-butadien-acrylnitril (ABS), styrol-acrylnitril-acrylat (ASA) Styrol-Maleinsäureanhydrid-Polymere einschl. entsprechender Pfropfcopolymere wie z.B. Styrol auf Butadien oder Maleinsäureanhydrid auf SBS.
c) Halogenenthaltende Polymere wie z.B. Polyvinylchlorid und Polyvinylidenchlorid.
d) Polymere von ungesättigten Estern wie z.B. Polyacrylate und Polymethacrylate wie PMMA, Polyacrylnitril.
e) Polymere aus ungesättigten Alkoholen und Derivaten, wie z.B. Polyvinylalkohol, Polyvinylacetat, Polyvinylbutyral.
f) Polyacetale, wie z.B. Polyoxymethylen.
g) Polyphenylenoxide und Blends mit Polystyrol.
h) Polyurethane, insbes. lineare Polyurethane.
i) Polyamide wie z.B. Polyamid-6, 6.6., 6.10. 4.6, 6.12, 12.12., Polyamid 11, Polyamid 12 sowie (teil-)aromatische Polyamide wie z.B. Polyphthalamide.
j) Polyimide, Polyamidimide, Polyetherimide, Polyketone, Polysulfone, Polyethersulfone, Polyphenylensulfid.
k) Polyester wie z.B. Polyethylenterephthalat und Polybutylenterephthalat, Polymilchsäure.
l) Polycarbonat.
m) Cellulosederivate wie z.B. Cellulosenitrat, Celluloseacetat, Cellulosepropionat.
n) sowie Mischungen, Kombinationen oder Blends aus zwei oder mehr der zuvor genannten Polymeren.

11. Materialzusammensetzung gemäß Anspruch 10,
**dadurch gekennzeichnet, dass**
das Polymer ein oder mehrere Polyolefine, insbesondere Polyethylen, Polypropylen, Copolymere oder Blends aus Ethylen und Propylen,, Polystyrol und/oder ein oder mehrere Polyurethane umfasst.

12. Verwendung einer Zusammensetzung gemäß mindestens einem der vorhergehenden Ansprüche als Flammschutzmittel, insbesondere für Kunststoffe in Form von Spritzgussteilen, Folien, Beschichtungen, Schäumen, Fasern, Kabeln und Rohren.

13. Verfahren zur Herstellung eines flammgeschützten Kunststoffes,
**dadurch gekennzeichnet, dass**
ein Kunststoff einer Zusammensetzung gemäß mindestens einem der Ansprüche 1-8 zugefügt wird.
